# EUROPÄISCHE PATENTSCHRIFT

(11) **EP 1 438 225 B1**
(45) Veröffentlichungstag und Bekanntmachung des Hinweises auf die Patenterteilung: **07.02.2007**
(21) Anmeldenummer: 02785263.1
(22) Anmeldetag: 21.10.2002
(51) Int. Cl.: B62J 11/00

(54) **HALTERUNG ZUR BEFESTIGUNG VON ELEKTRONISCHEN ZUSATZGERÄTEN AN ZWEIRÄDERN**
SUPPORT FOR FIXING AUXILIARY ELECTRONIC APPLIANCES ON TWO-WHEELERS
SUPPORT POUR FIXER DES APPAREILS ELECTRONIQUES AUXILIAIRES SUR DES DEUX-ROUES

(30) Priorität: 23.10.2001 DE 10151566
(43) Veröffentlichungstag der Anmeldung: 21.07.2004
(73) Patentinhaber: Schanz, Jochen, 78078 Niedereschach (DE); Schwarz, Herbert, 78078 Niedereschach (DE)
(72) Erfinder: Schanz, Jochen, 78078 Niedereschach (DE); Schwarz, Herbert, 78078 Niedereschach (DE)
(74) Vertreter: Zimmermann, Günter
(86) Internationale Anmeldenummer: PCT/EP2002/011762
(87) Internationale Veröffentlichungsnummer: WO 2003/035458

(56) Entgegenhaltungen:
- EP-A- 0 499 870
- US-A- 4 339 060
- PATENT ABSTRACTS OF JAPAN vol. 2000, no. 15, 6. April 2001 (2001-04-06) & JP 2000 335463 A (HONDA MOTOR CO LTD), 5. Dezember 2000 (2000-12-05) in der Anmeldung erwähnt

## Beschreibung

Die Erfindung bezieht sich auf eine Halterung zur Befestigung von elektronischen Zusatzgeräten an Zweirädern gemäß dem Oberbegriff des Anspruchs 1.

Eine derartige Halterung ist durch die DE 10009671 A1 bekannt. Das Betätigungsteil ist als Schieber ausgebildet, welcher durch eine Feder vorgespannt ist. Die Sperrklinke ist ein Z-förmiges Teil, welches mit dem Schieber zusammenwirkt. Die Halterung ist nachteiligerweise aufwendig konstruiert und nicht einfach bedienbar.

Durch die EP 1 029 779 A2, US 4 489 307, US 4 339 060 und JP 2000335463 A ist jeweils eine Halterung zur Befestigung von elektronischen Zusatzgeräten bekannt, wobei die Halterung formangepaßt das einzusetzende elektronische Zusatzgerät umschließt und durch eine Handhabung das Einsetzen und Herausnehmen, sowie die Sicherung des Zusatzgerätes ermöglicht.

Bei der in der US 4 339 060 beschriebenen Halterung handelt es sich um eine Batteriehalterung für ein Fahrrad, wobei nach Einsetzen der Batterie in die Halterung ein verschenkbarer Bügel mit einem wellenförmigen Federblech mit einem entsprechenden Gegenstück an der Halterung verrastet. Das Federblech verrastet nicht mit dem Zusatzgerät selbst.

Die Patentschrift EP-A-0 499 870 offenbart eine Halterung zur Befestigung von elektronischen Zusatzgeräten, wobei die Halterung das einzusetzende elektronisches Gerät nicht umschließt.

Die Aufgabe der Erfindung wird somit darin gesehen, die Halterung der eingangs genannten Art derart weiterzuentwickeln, daß das elektronische Zusatzgerät einfach, schnell und mit geringem Kraftaufwand in die Halterung eingesetzt und gelöst werden kann.

Zur Lösung dieser Aufgabe wird erfindungsgemäß vorgeschlagen, daß die Halterung gemäß dem Oberbegriff des Anspruchs 1 entsprechend dem kennzeichnenden Teil dieses Anspruches ausgebildet ist.

Alle Merkmale des Oberbegriffs im Anspruch 1 sind aus dem zitierten Stand der Technich bekannt.

Beim Einsetzen des Zusatzgerätes in die erfindungsgemäße Halterung wird zuerst das Zusatzgerät mit einer Hand erfaßt und dann in den formangepaßten Halterungskörper eingesetzt, wobei gleichzeitig mit einem Finger das Betätigungsteil nach hinten gedrückt wird. Wird das Betätigungsteil losgelassen, dann verrastet es mit dem Zusatzgerät. Das Einsetzen des Zusatzgerätes erfolgt also bei der erfindungsgemäßen Halterung durch eine einzige Bewegung in einer einzigen Bewegungsrichtung, da die Druckwirkung des Federblechs parallel zur Einsetzrichtung des Zusatzgerätes orientiert ist. Das Eingreifen, Umgreifen oder Einrasten wird realisiert durch die Sperrklinke mit Federelement, die sich um einen Knickpunkt/Knickachse dreht. Somit kann das Zusatzgerät einfach und schnell in die Halterung eingesetzt, gelöst und auch gesichert werden.

Bevorzugte Ausführungsformen der Erfindung sind in den Unteransprüchen beschrieben. Die Erfindung wird nachstehend anhand der Zeichnung näher erläutert. Hierbei stellen dar:

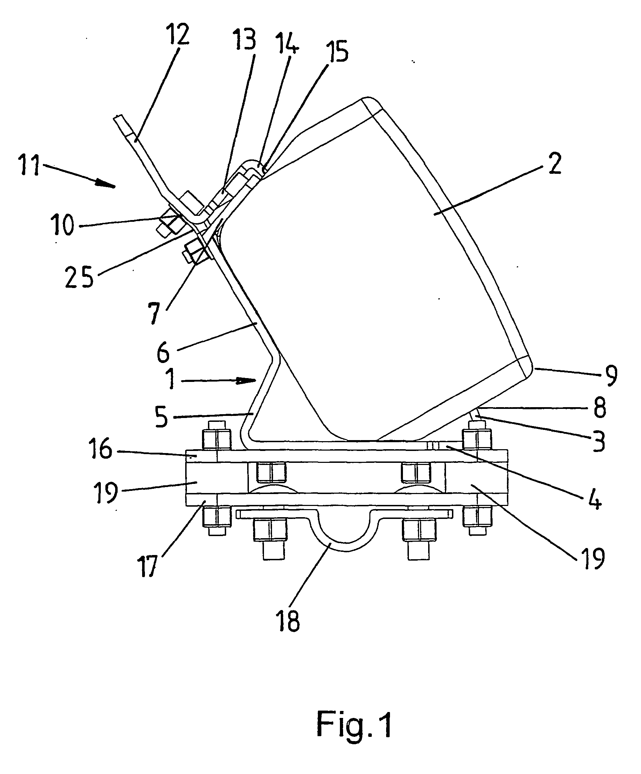

- Fig. 1: eine Seitenansicht mit Handhabe,
- Fig. 2: eine Seitenansicht mit Antennenhalter und Antenne,

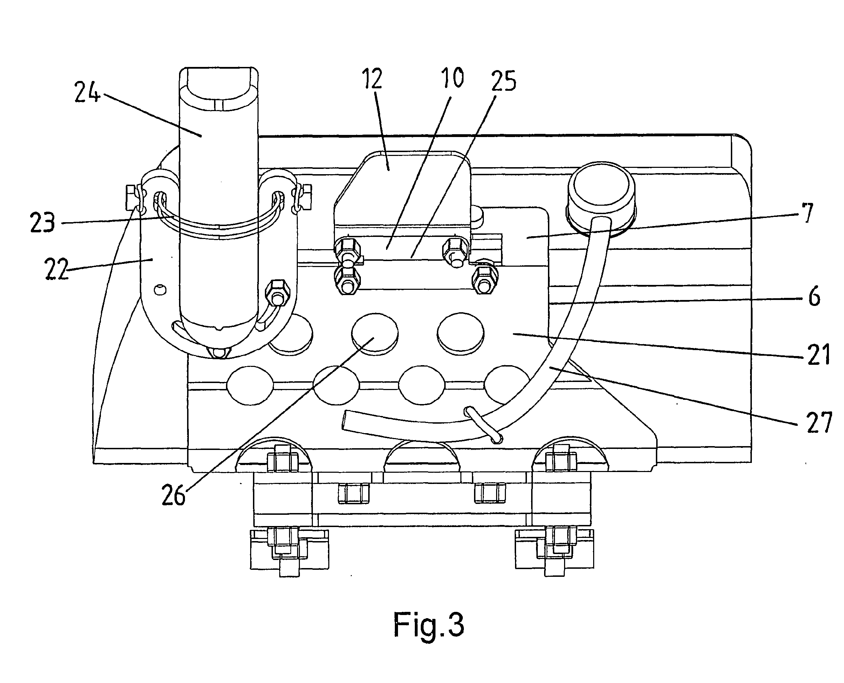

- Fig. 3: eine Rückansicht und

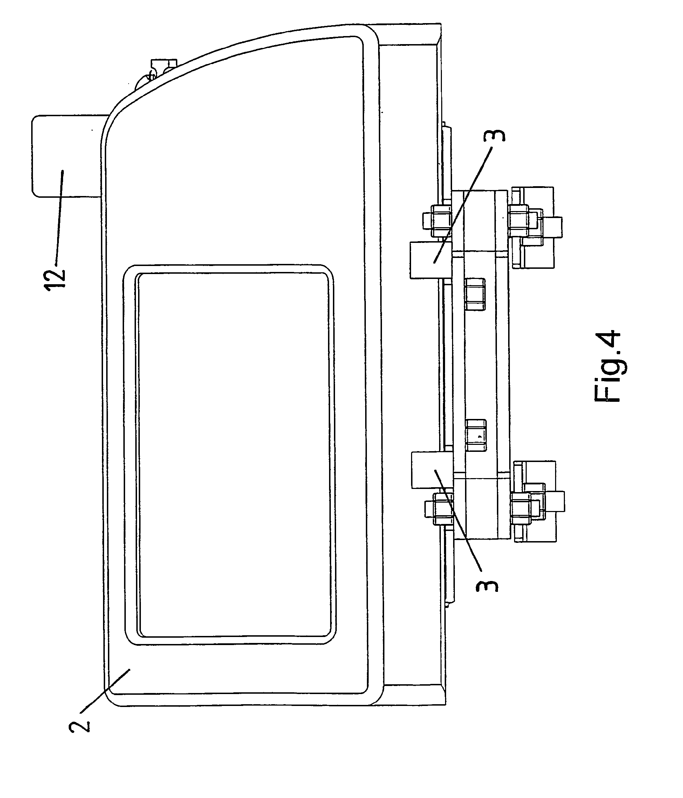

- Fig. 4: eine Vorderansicht.

Die erfindungsgemäße Halterung weist einen Halterungskörper 1 beispielsweise aus Aluminiumblech auf, welcher an das einzusetzende elektronische Zusatzgerät 2 formangepaßt ist. Der Halterungskörper 1 ist in fünf Halterungsabschnitte 3, 4, 5, 6, 7 eingeteilt. Der Halterungskörper 1 ist insgesamt einstückig ausgebildet. Der erste Halterungsabschnitt 3 und der zweite Halterungsabschnitt 4 sind etwa im unteren Bereich des Haltungskörpers 1 angeordnet. Der erste Halterungsabschnitt 3 besteht aus zwei nach oben ragenden Vorsprüngen, welche in eine Nut 8 des Zusatzgerätes 2 eingreifen. Die Nut 8 ist an einer Unterseite des Zusatzgerätes 2 angeordnet.

Alternativ kann der erste Halterungsabschnitt 3 auch eine Unterkante 9 des Gehäuses des Zusatzgerätes 2 umgreifen. Der zweite Halterungsabschnitt 4 verläuft horizontal und geht in den dritten Halterungsabschnitt 5 und nachfolgend in den vierten Halterungsabschnitt 6 über. Im oberen Bereich befindet sich der fünfte Halterungsabschnitt 7. Die Halterungsabschnitte sind formangepaßt so ausgebildet, daß das Zusatzgerät 2 mit seiner Oberseite an dem fünften Halterungsabschnitt 7, mit seiner Rückseite an dem vierten Halterungsabschnitt 6 und mit einem Bereich seiner Unterseite an dem zweiten Halterungsabschnitt 4 anliegt. Etwa am oberen Ende des vierten Halterungsabschnitts 6 kurz vor dem Übergang zu dem fünften Halterungsabschnitt 7 ist als ein Federelement 10 ein Federblech mittels Schrauben befestigt, welches nach oben ragt. Das Federblech 10 ist flach ausgebildet und sowohl in seinem Querschnitt als auch in seiner Form rechteckig. Das obere Ende des Federblechs 10 ist ebenfalls mit Schrauben mit einer Handhabe 11 verbunden, welche einstückig ausgebildet ist und aus einem Betätigungsteil 12 und einer Sperrklinke 13 besteht. Das Betätigungsteil 12 und die Sperrklinke 13 sind etwa im 90°-Winkel zueinander angeordnet. Am vorderen Ende der Sperrklinke 13 erstreckt sich etwa mit 90° nach unten abgebogen eine Rastnase 14. Die Rastnase 14 greift in eine Nut 15 in der Oberseite des Zusatzgerätes 2 ein.

Beim Einsetzen des Zusatzgerätes 2 in die Halterung wird das Zusatzgerät 2 mit einer Hand zuerst in den Halterungskörper 1 eingesetzt, wobei der erste Halterungsabschnitt 3 in die Nut 8 eingesetzt wird. Gleichzeitig betätigt ein Finger der Hand das Betätigungsteil 12 und drückt dieses etwas nach hinten gegen die Kraft des Federblechs 10, wodurch die Sperrklinke 13 nach oben angehoben wird. Sobald das Zusatzgerät 2 mit seiner Rückseite an dem vierten Halterungsabschnitt 6 anliegt, wird die Hand von dem Zusatzgerät 2 und damit auch der Finger von dem Betätigungsteil 12 genommen, so daß dieses sich unter der Kraft des Federblechs 10 wieder nach vorne bewegt und die Sperrklinke 13, insbesondere die Rastnase 14, in die Nut 15 eingreift. Das Zusatzgerät 2 ist nun gesichert. Da das Federblech 10 um einen Knickpunkt oder Knickachse 25 dreht und somit die Druckwirkung des Federbleches 10 etwa parallel zur Einsetzrichtung des Zusatzgerätes 2 orientiert ist, kann das Einsetzen des Zusatzgerätes 2 und auch das Betätigen der Handhabe 11 in einer einzigen Bewegungsrichtung ausgeführt werden. Dies ermöglicht ein schnelles und einfaches Einsetzen, Herausnehmen und auch Sichern des Zusatzgerätes 2 in der erfindungsgemäßen Halterung. Alternativ kann die Sperrklinke 13 auch eine oder mehrere Gerätekanten umschließen, um das Zusatzgerät 2 zu sichern.

Die Halterung weist weiterhin eine obere Bodenplatte 16 und eine untere Bodenplatte 17 auf. Die obere Bodenplatte 16 ist mit dem horizontal verlaufenden zweiten Halterungsabschnitt 4 verbunden. Die untere Bodenplatte 17 weist eine Halteschelle 18 auf, um die Halterung beispielsweise an einem Lenker eines Motorrades zu befestigen. Als Vibrationsschutz oder Schlagschutz für das elektronische Zusatzgerät 2 sind zwischen der oberen Bodenplatte 16 und der unteren Bodenplatte 17 Dämpfungselemente 19 angeordnet. Damit ist der Halterungskörper 1 zum Zweirad hin vibrationsentkoppelt.

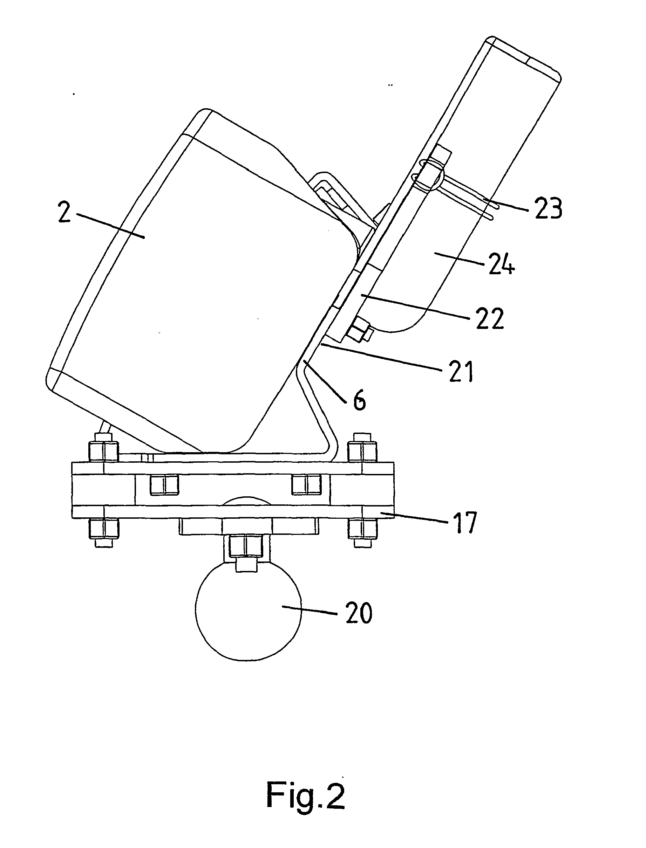

Bei dem Ausführungsbeispiel gemäß Fig. 2 wird anstelle der Halteschelle 18 zur Befestigung an dem Lenker eine Kugel 20 verwendet. Damit ist die Ausrichtung des elektronischen Zusatzgerätes 2 bzw. der Halterung in praktisch jede Position möglich. Alternativ kann die untere Bodenplatte 17 auch direkt mit Verbindungselementen an dem Zweirad befestigt werden.

An einer Rückwand 21 des vierten Halterungsabschnittes 6 ist ein U-förmiger Antennenhalter 22 aus Kunststoff angebracht. Das offene Ende der U-Form zeigt dabei nach oben. An dem Antennenhalter 22 ist im oberen Bereich ein Sicherungsgummi 23 angebracht, um die Position einer Antenne 24 zu stabilisieren. Der Sicherungsgummi 23 wird durch Aussparungen gefädelt und an einem Zapfen eingehängt.

An der Rückwand 21 des vierten Halterungsabschnittes 6 sind weiterhin Öffnungen oder Aussparungen 26 angebracht, damit der Anschluß eines Strom- und/oder Datenkabels 27 ermöglicht wird.

## Patentansprüche

1. Halterung zur Befestigung von elektronischen Zusatzgeräten (2) an Zweirädern, wobei ein Halterungskörper (1) formangepaßt das einzusetzende elektronische Zusatzgerät (2) umschließt und eine von einem Federelement (10) beaufschlagte Handhabe (11) mit einem Betätigungsteil (12) und einer Sperrklinke (13), welche mit dem Zusatzgerät (2) verrastbar ist, das Einsetzen und Herausnehmen, sowie die Sicherung des elektronischen Zusatzgerätes (2) ermöglicht,
**dadurch gekennzeichnet,**
**daß** das Federelement (10) ein Federblech ist, welches um einen Knickpunkt oder Knickachse (25) drehbar ist.

2. Halterung nach Anspruch 1,
**dadurch gekennzeichnet,**
**daß** die Sperrklinke (13) in eine Nut (15) eingreift.

3. Halterung nach Anspruch 1,
**dadurch gekennzeichnet,**
**daß** die Sperrklinke (13) eine oder mehrere Gerätkanten umschließt.

4. Halterung nach Anspruch 1,
**dadurch gekennzeichnet,**
**daß** sich die Handhabe (11) in einem oberen Bereich oder in einem unteren Bereich befindet.

5. Halterung nach einem der vorhergehenden Ansprüche,
**dadurch gekennzeichnet,**
**daß** das Betätigungsteil (12) der Handhabe (11) über ein Gerätegehäuse hinaussteht.

6. Halterung nach Anspruch 1,
**dadurch gekennzeichnet,**
**daß** der formangepaßte Halterungskörper (1) durch Dämpfungselemente (19) zum Zweirad vibrationsentkoppelt ist.

7. Halterung nach Anspruch 1,
**dadurch gekennzeichnet,**
**daß** eine Bodenplatte (17) Bohrungen hat, um eine direkte Montage auf das Zweirad, eine Befestigung mit Halteschellen (18) oder eine Befestigung einer Kugel (20) zu ermöglichen.

8. Halterung nach Anspruch 1,
**dadurch gekennzeichnet,**
**daß** an einer Rückwand (21) ein U-förmiger Antennenhalter (22) angebracht ist.

9. Halterung nach Anspruch 8,
**dadurch gekennzeichnet,**
**daß** der U-förmige Antennenhalter (22) in der Position verstellbar ist.

10. Halterung nach den Ansprüchen 8 oder 9,
**dadurch gekennzeichnet,**
**daß** der Antennenhalter (22) aus Kunststoff ist.

11. Halterung nach einem der vorhergehenden Ansprüche 8 bis 10,
**dadurch gekennzeichnet,**
**daß** ein Sicherungsgummi (23) die Antennenposition sichert.

12. Halterung nach Anspruch 1,
**dadurch gekennzeichnet,**
**daß** an eine Rückwand (21) Aussparungen (26) vorgesehen sind, um einen Anschluß von Strom- und/oder Datenleitungen (27) zu ermöglichen.

## Claims

1. Support for fastening auxiliary electronic devices (2) to two-wheelers, wherein a support body (1) encloses the auxiliary electronic device (2) to be inserted so as to be adapted in terms of shape, and a handle (11), which is acted upon by a spring element (10), having an actuating part (12) and a detent pawl (13), which can be engaged with the auxiliary device (2), allows the insertion and removal and the securing of the auxiliary electronic device (2), **characterised in that** the spring element (10) is a spring steel sheet, which can be rotated about an inflection point or an inflection axis (25).

2. Support according to claim 1, **characterised in that** the detent pawl (13) engages in a groove (15).

3. Support according to claim 1, **characterised in that** the detent pawl (13) encloses one or more edges of the device.

4. Support according to claim 1, **characterised in that** the handle (11) is located in an upper region or in a lower region.

5. Support according to any one of the preceding claims, **characterised in that** the actuating part (12) of the handle (11) projects over a housing of the device.

6. Support according to claim 1, **characterised in that** the support body (1), which is adapted in terms of shape, is vibration-decoupled with respect to the two-wheeler by damping elements (19).

7. Support according to claim 1, **characterised in that** a base plate (17) has bores to allow direct assembly on the two-wheeler, fastening with holding clamps (18) or fastening of a ball (20).

8. Support according to claim 1, **characterised in that** a U-shaped antenna holder (22) is attached to a rear wall (21).

9. Support according to claim 8, **characterised in that** the U-shaped antenna holder (22) can be adjusted with regard to position.

10. Support according to claims 8 or 9, **characterised in that** the antenna holder (22) is made of plastics material.

11. Support according to any one of the preceding claims 8 to 10, **characterised in that** a securing rubber (23) secures the antenna position.

12. Support according to claim 1, **characterised in that** recesses (26) are provided on a rear wall (21) in order to allow connection of power and/or data lines (27).

## Revendications

1. Support pour la fixation d'appareils électroniques auxiliaires (2) à des deux-roues, un corps de fixation (1) adapté entourant l'appareil (2) électronique auxiliaire à insérer et une manette (11) chargée par un élément à ressort (10) avec une partie d'actionnement (12) et un cliquet de blocage (13), laquelle peut être encliquetée avec l'appareil auxiliaire (2), permettant l'insertion et le retrait ainsi que la fixation de l'appareil électronique auxiliaire (2),
**caractérisé en ce**
**que** l'élément à ressort (10) est une tôle élastique à ressort, laquelle peut pivoter autour d'un point d'inflexion ou d'un axe d'inflexion (25).

2. Support selon la revendication 1,
**caractérisé en ce**
**que** le cliquet de blocage (13) vient en prise dans une ramure(15).

3. Support selon la revendication 1,
**caractérisé en ce**
**que** le cliquet de blocage (13) entoure une ou plusieurs arêtes d'appareils.

4. Support selon la revendication 1,
**caractérisé en ce**
**que** la manette (11) se situe dans une zone supérieure ou dans une zone inférieure.

5. Support selon l'une quelconque des revendications précédentes,
**caractérisé en ce**
**que** la partie d'actionnement (12) de la manette (11) dépasse d'un boîtier d'appareil.

6. Support selon la revendication 1,
**caractérisé en ce**
**que** le corps de fixation (1) adapté est découplé par rapport aux vibrations du deux-roues par des éléments d'amortissement (19).

7. Support selon la revendication 1,
**caractérisé en ce**
**qu'**une plaque de base (17) possède des perçages pour permettre un montage direct sur le deux-roues, une fixation avec des brides de retenue (18) ou une fixation d'une bille (20).

8. Support selon la revendication 1,
**caractérisé en ce**
**qu'**un support d'antenne (22) en forme de U est fixé au niveau d'une paroi arrière (21).

9. Support selon la revendication 8,
**caractérisé en ce**
**que** le support d'antenne (22) en forme de U peut être réglé en position.

10. Support selon la revendications 8 ou 9,
**caractérisé en ce**
**que** le support d'antenne (22) est en matière synthétique.

11. Support selon l'une quelconque des revendications précédentes 8 à 10,
**caractérisé en ce**
**qu'**un caoutchouc de sécurité (23) garantit la position de l'antenne.

12. Support selon la revendication 1,
**caractérisé en ce**
**que** des évidements (26) sont prévus au niveau d'une paroi arrière (21) pour permettre de raccorder des câbles électriques et/ou des câbles de transmission de données (27).
